# FASCICULE DE BREVET EUROPEEN

(11) **EP 4 606 547 B1**
(45) Date de publication et mention de la délivrance du brevet: **16.09.2026**
(21) Numéro de dépôt: 25159047.7
(22) Date de dépôt: 20.02.2025
(51) Int. Cl.: B29C 44/12, B60N 2/58, B60N 2/70

(54) **ELÉMENT DE REMBOURRAGE POUR SIÈGE DE VÉHICULE**
POLSTERELEMENT FÜR EINEN FAHRZEUGSITZ
UPHOLSTERY ELEMENT FOR VEHICLE SEAT

(30) Priorité: 22.02.2024 FR 2401758
(43) Date de publication de la demande: 27.08.2025
(73) Titulaire: FAURECIA Sièges d'Automobile, 92000 Nanterre (FR)
(72) Inventeur: FOUINAT, Didier, 91530 Saint-Chéron (FR); ETIENNE, Fabrice, 90800 Bavilliers (FR); THIEL, Marc, 70400 Héricourt (FR)
(74) Mandataire: Novagraaf Group

(56) Documents cités:
- FR-A1- 2 777 879
- US-B2- 6 838 155

## Description

La présente invention concerne un élément de rembourrage pour siège de véhicule, comprenant un bloc de mousse, ledit bloc comprenant une surface externe et une rainure ladite rainure comprenant un fond et des parois latérales débouchant sur ladite surface externe; l'élément de rembourrage comprenant en outre un support d'accroche, disposé au fond de la rainure.

Un tel élément de rembourrage est notamment connu du document FR2815901, au nom de la Demanderesse. Le document US 6 838 155 82 divulgue un élément de rembourrage pour siège de véhicule selon le préambule de la revendication 1 et un procédé de fabrication d'un élément de rembourrage .

Afin de solidariser le revêtement de siège à l'élément de rembourrage, il est connu de munir ledit élément de rembourrage de supports d'accroche insérés dans la mousse et formés par exemple de tiges métalliques, des pièces plastiques rigides ou des bandes autoagrippantes. De telles configurations compliquent les opérations de recyclage des éléments de rembourrage.

Le but de l'invention est de proposer un élément de rembourrage alliant une bonne solidité et une configuration facilitant le recyclage.

A cet effet, l'invention a pour objet un élément de rembourrage du type précité, dans lequel le support d'accroche comprend: une surface de contact, solidaire du fond de la rainure ; et une nervure, disposée à l'opposé de la surface de contact, en direction de la surface externe du bloc de mousse.

Suivant d'autres aspects avantageux de l'invention, l'élément de rembourrage comporte l'une ou plusieurs des caractéristiques suivantes, prises isolément ou suivant toutes les combinaisons techniquement possibles :
- le support d'accroche est formé d'un matériau plastique présentant une densité supérieure à celle du bloc de mousse ;
- chacun de la mousse du bloc et du matériau plastique du support d'accroche comprend du polyuréthane ;
- la surface de contact et la nervure du support d'accroche s'étendent de manière continue sur une longueur de la rainure du bloc de mousse.

L'invention concerne en outre un procédé de fabrication d'un élément de rembourrage tel que décrit ci-dessus, le procédé comprenant : une étape de fabrication du support d'accroche par moulage du matériau plastique ; puis une étape de fabrication du bloc de mousse, par surmoulage sur ledit support d'accroche, de sorte à solidariser la surface de contact dudit support d'accroche avec le fond de la rainure du bloc de mousse.

Suivant d'autres aspects avantageux de l'invention, le procédé de fabrication comporte l'une ou plusieurs des caractéristiques suivantes, prises isolément ou suivant toutes les combinaisons techniquement possibles :
- l'étape de fabrication du support d'accroche comprend : la fourniture d'un élément de moulage comprenant une cannelure de forme complémentaire à la nervure du support d'accroche ; et la coulée du matériau plastique à l'état fluide dans ladite cannelure, de sorte qu'une surface supérieure dudit matériau plastique forme la surface de contact du support d'accroche ;
- l'élément de moulage comprend des flancs disposés de part et d'autre de la cannelure, lesdits flancs présentant une forme complémentaire des parois latérales de la rainure du bloc de mousse ; et l'étape de fabrication du bloc de mousse comprend un surmoulage sur ledit élément de moulage recevant le support d'accroche, de sorte à former la rainure, le fond de ladite rainure étant solidaire de la surface de contact dudit support d'accroche.

L'invention concerne en outre un élément de rembourrage tel que décrit ci-dessus, issu d'un procédé de fabrication tel que décrit ci-dessus.

L'invention se rapporte en outre à un siège de véhicule comprenant : un élément de rembourrage tel que décrit ci-dessus ; un revêtement souple, au contact de la surface externe dudit élément de rembourrage ; et une pluralité d'éléments d'accroche, fixés d'une part audit revêtement souple et d'autre part à la nervure du support d'accroche de l'élément de rembourrage.

Optionnellement, le siège de véhicule est tel que la pluralité d'éléments d'accroche comprend au moins une agrafe métallique s'étendant entre deux extrémités, lesdites extrémités étant insérées dans la nervure du support d'accroche.

L'invention apparaîtra plus clairement à la lecture de la description qui va suivre, donnée uniquement à titre d'exemple non limitatif, et faite en référence aux dessins dans lesquels :
- la figure 1 est une vue partielle d'un élément de rembourrage selon un mode de réalisation de l'invention ;
- la figure 2 est une vue de détail, en coupe, d'un siège de véhicule comprenant l'élément de rembourrage de la figure 1 ; et
- les figures 3 et 4 sont des représentations schématiques d'étapes d'un procédé de fabrication de l'élément de rembourrage de la figure 1.

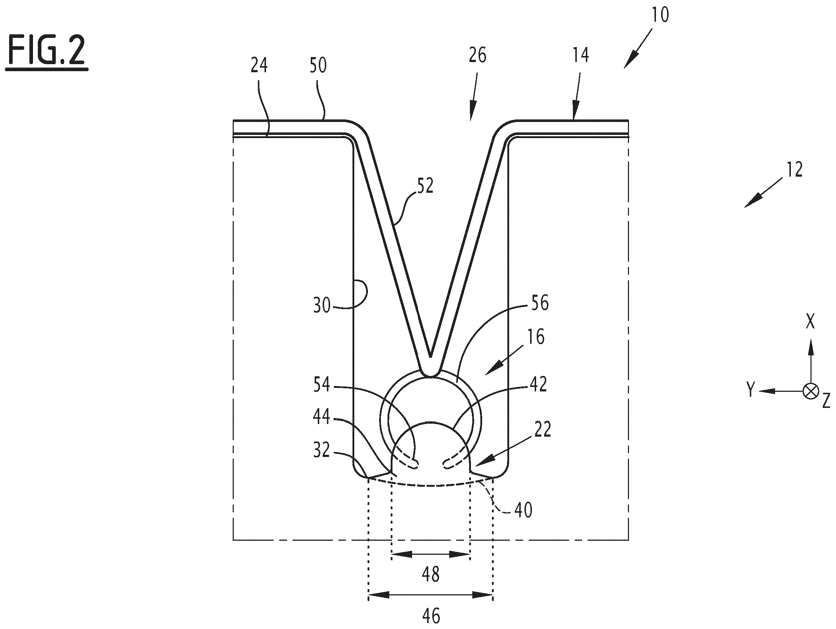

La figure 2 représente schématiquement une vue de détail, en coupe, d'un siège 10 de véhicule selon un mode de réalisation de l'invention.

Le siège 10 comprend notamment : un élément 12 de rembourrage ; un revêtement 14 ; et une pluralité d'éléments 16 d'accroche. Un seul élément 16 d'accroche est visible sur la figure 2.

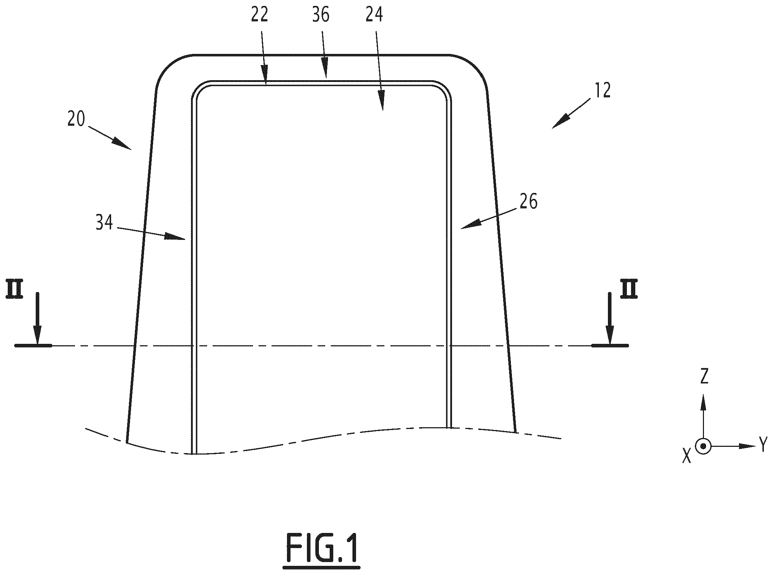

La figure 1 représente une vue partielle de l'élément 12 de rembourrage, montrant le plan de coupe de la figure 2. Dans le mode de réalisation représenté sur la figure 1, l'élément 12 de rembourrage est destiné à la fabrication d'un dossier du siège 10. Selon un autre mode de réalisation non représenté, un élément de rembourrage permet la fabrication d'une assise du siège 10.

L'élément 12 de rembourrage comprend un bloc 20 et un support 22 d'accroche.

Le bloc 20 est formé en une mousse déformable élastiquement, ladite mousse étant composée d'un premier matériau plastique. Par « mousse », on entend que le bloc 20 présente une structure alvéolaire souple à cellules ouvertes (non représentées).

De préférence, la mousse formant le bloc 20 présente une densité comprise entre 30 Kg/m³ et 100 Kg/m³. De préférence, la mousse formant le bloc 20 présente une caractéristique de contrainte-déformation en pression comprise entre 3 KPa et 20 KPa selon la norme DIN EN ISO 3386.

De préférence, le premier matériau plastique comprend du polyuréthane.

Le bloc 20 comprend une surface externe 24 et une rainure 26. Comme décrit plus précisément ci-après, la surface externe 24 est destinée à être recouverte du revêtement 14 pour une mise en contact avec une partie du corps d'un utilisateur du siège 10.

On considère une base orthonormée (X, Y, Z) associée à l'élément 12 de rembourrage. Dans le mode de réalisation représentée, la surface externe 24 du bloc 20 s'étend sensiblement dans un plan (Y, Z).

La rainure 26 s'étend sur la surface externe 24, comme visible sur la figure 1. Plus précisément, comme visible sur la figure 2, la rainure 26 comprend deux parois latérales 30, débouchant sur ladite surface externe 24. La rainure 26 comporte en outre un fond 32, disposé à l'opposé de la surface externe 24 par rapport aux parois latérales 30.

Dans le mode de réalisation représenté, les parois latérales 30 sont sensiblement parallèles l'une à l'autre. En outre, dans le mode de réalisation représenté, les parois latérales 30 sont sensiblement parallèles à la direction X.

En variante non représentée, les parois latérales de la rainure s'écartent légèrement l'une de l'autre entre le fond 32 de la rainure et la surface externe 24 du bloc 20. Par exemple, les parois latérales forment l'une avec l'autre un angle compris entre 0° et 15°.

Une profondeur de la rainure 26 selon la direction X, entre le fond 32 et la surface externe 24, est préférentiellement comprise entre 5 mm et 3 cm, plus préférentiellement comprise entre 15 mm et 25 mm.

De préférence, la rainure 26 s'étend de manière continue sur la surface externe 24 et comprend des portions sensiblement rectilignes et/ou des portions recourbées. Dans le mode de réalisation représenté, la rainure 26 présente une forme sensiblement en U, comprenant deux portions latérales 34 s'étendant sensiblement selon Z et une portion supérieure 36 s'étendant sensiblement selon Y. Chacune des portions latérales 34 est continue avec la portion supérieure.

En variante non représentée, la rainure 26 est refermée sur elle-même, formant par exemple un rectangle ou un carré. Une telle forme est notamment adaptée à une assise de siège (non représentée).

Selon une autre variante non représentée, la rainure 26 présente une forme sensiblement en H.

La forme de la rainure 26 sur la surface externe 24 permet de conférer une certaine apparence esthétique à l'élément de rembourrage 12, d'assurer une application satisfaisante du revêtement 14 sur l'élément de rembourrage 12 et d'assurer un certain confort pour le passager.

Le support 22 d'accroche est disposé au fond de la rainure 26.

Plus précisément, le support 22 d'accroche comprend une surface 40 de contact et une nervure 42. La surface 40 de contact est solidaire du fond 32 de la rainure 26. La nervure 42 est disposée à l'opposé de la surface 40 de contact, en direction de la surface externe 24.

Préférentiellement, la surface de contact 40 et la nervure 42 du support d'accroche s'étendent de manière continue sur une longueur de la rainure 26 du bloc de mousse. De même que ladite rainure, le support 22 d'accroche comprend des portions sensiblement rectilignes et/ou des portions recourbées.

Préférentiellement, le support 22 d'accroche comprend une embase 44 matérialisant la surface 40 de contact. La nervure 42 forme une saillie par rapport à ladite embase 44, à l'opposé de la surface 40 de contact. Plus préférentiellement, l'embase 44 présente une largeur 46 supérieure à une largeur 48 de la nervure 42, perpendiculairement à une direction principale de la rainure 26.

Selon un mode de réalisation non représenté, l'embase 44 présente une section sensiblement triangulaire ou en poire, de sorte à optimiser le contact entre le support 22 d'accroche et le bloc 20 de mousse.

Préférentiellement, le support 22 d'accroche est formé d'un deuxième matériau plastique. Plus préférentiellement, le deuxième matériau plastique présente une densité supérieure à celle du bloc 20 de mousse.

Selon un premier mode de réalisation, le deuxième matériau plastique est non expansé, c'est-à-dire que ledit deuxième matériau ne présente pas de structure alvéolaire. En d'autres termes, ledit deuxième matériau est homogène ou massif.

Selon le premier mode de réalisation, le deuxième matériau plastique présente préférentiellement une densité comprise entre 600 Kg/m³ et 900 Kg/m³. Selon le premier mode de réalisation, le deuxième matériau plastique présente préférentiellement une dureté Shore A comprise entre 60 et 100.

Selon un deuxième mode de réalisation, le deuxième matériau plastique est légèrement expansé, c'est-à-dire que ledit deuxième matériau comporte des alvéoles moins nombreuses et/ou de taille plus réduite que celles du bloc 20 de mousse. Selon le deuxième mode de réalisation, le deuxième matériau plastique présente préférentiellement une densité comprise entre 200 Kg/m³ et 400 Kg/m³.

De préférence, le deuxième matériau plastique comprend du polyuréthane.

Le revêtement 14 du siège 10 forme une couche flexible. Le revêtement 14 est par exemple formé d'un matériau textile, naturel ou synthétique, ou de cuir naturel ou synthétique.

Le revêtement 14 comporte : une zone principale 50, au contact de la surface externe 24 du bloc 20 de mousse ; et une zone 52 de fixation, disposée dans la rainure 26.

Par exemple, le revêtement 14 comprend une pluralité de couches, notamment une couche de base, une couche de mouse refendue et une couche d'aspect.

Chacun de la pluralité d'éléments 16 d'accroche est fixé, d'une part à la nervure 42 du support 22 d'accroche de l'élément 12 de rembourrage, et d'autre part à la zone 52 de fixation du revêtement 14.

Dans le mode de réalisation représenté, l'élément 16 d'accroche présente une forme recourbée, s'étendant entre deux extrémités 54. L'élément 16 d'accroche comporte en outre une partie centrale 56 disposée entre lesdites extrémités 54.

Chacune des extrémités 54 de l'élément 16 d'accroche est insérée dans la nervure 42 du support 22 d'accroche. La partie centrale 56 de l'élément 16 d'accroche est fixée à la zone 52 de fixation du revêtement 14.

De préférence, l'élément 16 d'accroche est une agrafe métallique, par exemple une agrafe métallique déformable auto-perforante. De préférence, la pluralité d'éléments 16 d'accroche est répartie sur une longueur de la rainure 26.

Dans le mode de réalisation représenté, l'élément 16 d'accroche est fixé au contact de la zone 52 de fixation du revêtement 14. Selon une variante de réalisation (non représentée), le siège 10 comporte en outre une pluralité d'éléments de rappel, chacun desdits éléments de rappel étant fixé, d'une part à la partie centrale 56 d'un élément 16 d'accroche, et d'autre part à la zone 52 de fixation du revêtement 14.

Un procédé de fabrication de l'élément 12 de rembourrage ci-dessus va maintenant être décrit.

Le procédé de fabrication comprend : une première étape de fabrication du support 22 d'accroche par moulage du deuxième matériau plastique ; puis une deuxième étape de fabrication du bloc 20 de mousse, par surmoulage sur ledit support 22 d'accroche. La surface 40 de contact dudit support 22 d'accroche est ainsi solidarisée avec le fond 32 de la rainure 26 du bloc 20 de mousse.

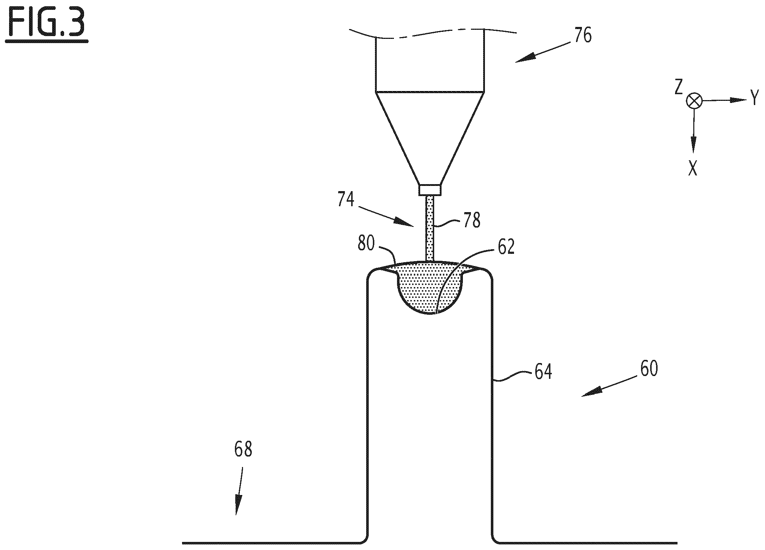

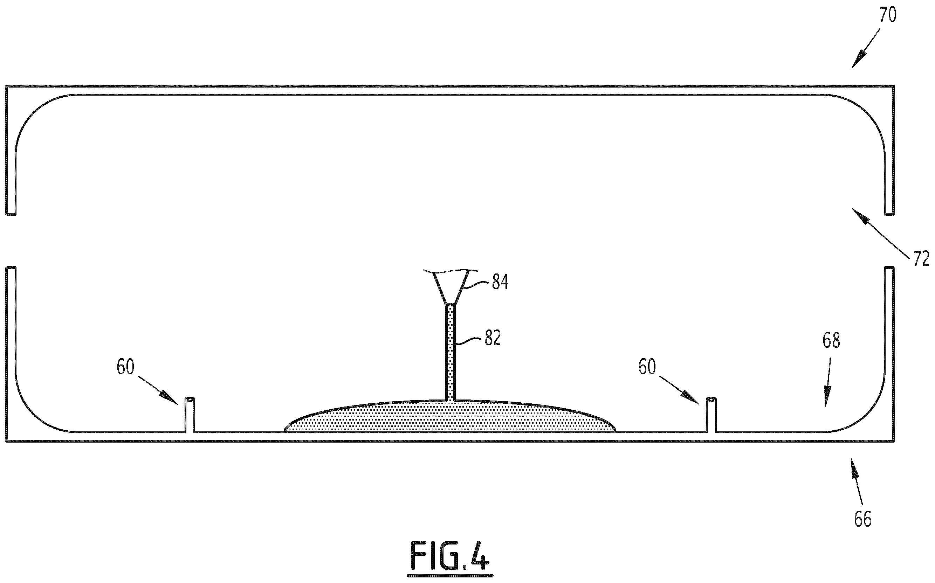

Les figures 3 et 4 représentent schématiquement des étapes du procédé de fabrication susmentionné.

En particulier, la figure 3 représente schématiquement, en coupe, un élément 60 de moulage permettant la mise en oeuvre de la première étape de fabrication du support 22 d'accroche.

L'élément 60 de moulage comprend une cannelure 62, de forme complémentaire à la nervure 42 du support d'accroche. Dans le mode de réalisation représenté, l'élément 60 de moulage comprend des flancs 64, disposés de part et d'autre de la cannelure 62. Les flancs 64 présentent une forme complémentaire des parois latérales 30 de la rainure 26 du bloc 20 de mousse. La cannelure 62 est disposée à une extrémité des flancs 64.

Dans le mode de réalisation représenté, l'élément 60 de moulage est formé d'une pièce avec un moule 66 représenté sur la figure 4. En variante, l'élément 60 de moulage est une pièce rapportée et fixée sur le moule 66.

Le moule 66 comporte un fond 68 de moule, de forme complémentaire à la surface externe 24 du bloc 20. Les flancs 64 de l'élément 60 de moulage forment une saillie par rapport au fond 68 de moule, la cannelure 62 étant disposée à l'opposé dudit fond de moule.

L'élément 60 de moulage est disposé sur le fond 68 de moule selon une trajectoire correspondant à celle de la rainure 26 sur la surface externe 24 du bloc 20. Par exemple, selon le mode de réalisation représenté, l'élément de moulage 60 est venu de matière avec le fond de moule 68.

Dans le mode de réalisation représenté sur la figure 4, le moule 66 comporte en outre un couvercle 70, apte à s'assembler de manière amovible avec le fond 68 de moule pour définir une enceinte 72 fermée. Une forme interne de ladite enceinte est complémentaire d'une forme externe de l'élément 12 de rembourrage.

De préférence, le moule 66 comporte des évents (non représentés) permettant un dégazage de l'enceinte 72.

Selon un mode préférentiel de réalisation, la première étape de fabrication du support 22 d'accroche se déroule comme suit :
Tout d'abord, l'élément 60 de moulage est disposé de sorte que la cannelure 62 soit ouverte vers le haut.

Puis, une première composition fluide 74 est mise en œuvre dans une première tête 76 d'injection. La première composition fluide 74 est précurseur du deuxième matériau plastique formant le support 22 d'accroche.

Préférentiellement, la première composition fluide 74 est obtenue par mélange d'un premier composant, comprenant une résine isocyanate, et d'un deuxième composant, comprenant un polyol. Par exemple, le deuxième composant comprend un ou plusieurs polyols, ainsi que des additifs. La première composition fluide 74 permet ainsi d'obtenir un polyuréthane.

Plus préférentiellement, une teneur en eau de la première composition fluide 74 est inférieure à 0,5% en masse par rapport à la masse de polyols, de sorte à obtenir un matériau dense.

Ensuite, la première tête 76 d'injection est disposée au-dessus de la cannelure 62 de l'élément 60 de moulage ; puis un cordon 78 de coulée de première composition fluide 74 est coulé dans ladite cannelure 62 alors que la première tête 76 d'injection est déplacée sur une longueur de ladite cannelure. De préférence, une section du cordon 78 de coulée est compris entre 0,2 cm² et 0,6 cm². De préférence, un débit de première composition fluide 74 est compris entre 3 cm³ et 50 cm³ par seconde, de manière à maintenir un flux sensiblement laminaire.

La cannelure 62 de l'élément de moulage est ainsi remplie de première composition fluide 74. Après durcissement, une surface supérieure 80 du deuxième matériau plastique obtenu forme la surface 40 de contact du support 22 d'accroche. Le matériau remplissant la cannelure 62 forme la nervure 42 dudit support d'accroche.

Selon un mode préférentiel de réalisation, la deuxième étape de fabrication du bloc 20 de mousse se déroule comme suit :
Après la coulée de première composition fluide 74, le support 22 d'accroche étant encore reçu dans la cannelure 62 de l'élément 60 de moulage, une deuxième composition fluide 82 (figure 4) est mise en œuvre dans une deuxième tête 84 d'injection. La deuxième composition fluide 82 est précurseur de la mousse formant le bloc 20 de l'élément 12 de rembourrage.

Selon un mode préférentiel de réalisation, la deuxième composition fluide 82 comprend un mélange des premier et deuxième composants décrits ci-dessus, comprenant respectivement une résine isocyanate et un polyol. De plus, un agent moussant tel que de l'eau est ajouté. De préférence, une teneur en eau de la deuxième composition fluide 82 est compris entre 0,5% et 6% en masse par rapport à la masse de polyols. La deuxième composition fluide 82 permet ainsi d'obtenir un matériau expansé tel qu'une mousse polyuréthane.

Ensuite, le moule 66 étant ouvert, la deuxième tête 84 d'injection est disposée au-dessus du fond 68 de moule et la deuxième composition fluide 82 est coulée sur ledit fond 68. De préférence, un débit de deuxième composition fluide 82 est supérieur à 150 cm³ par seconde.

Le moule 66 est ensuite fermé en assemblant le fond 68 de moule et le couvercle 70, matérialisant l'enceinte 72. La deuxième composition fluide 82 s'expanse, remplissant ladite enceinte 72 pour former le bloc 20 de mousse.

Lors de l'expansion de la deuxième composition fluide 82, ladite deuxième composition submerge l'élément 60 de moulage portant le support 22 d'accroche. La surface 40 de contact dudit support se trouve ainsi recouverte par la mousse en formation.

La rainure 26 du bloc 20 est ainsi formée autour de l'élément 60 de moulage. Par ailleurs, le fond 32 de ladite rainure se retrouve fixé à la surface 40 de contact du support 22 d'accroche.

Selon une première alternative, la coulée de la deuxième composition fluide 82 est mise en œuvre alors que la première composition fluide 64, reçue dans la cannelure 62, est encore en cours de durcissement. Selon une deuxième alternative, la coulée de la deuxième composition fluide 82 est mise en œuvre après la fin du durcissement de ladite première composition fluide 74. Dans les deux cas, une bonne adhésion est obtenue entre la surface 40 de contact du support 22 d'accroche et le fond 32 de la rainure 26.

De préférence, la fermeture du moule 66 est réalisée alors que la deuxième composition fluide 82 est déjà partiellement expansée. Le dégazage dudit moule est ainsi facilité.

Après durcissement de la deuxième composition fluide 82, conduisant à la formation de la mousse du bloc 20, l'élément 12 de rembourrage ainsi obtenu est démoulé.

Selon un mode préférentiel de réalisation, préalablement aux première et deuxième étapes décrites ci-dessus, le procédé de fabrication comprend l'application d'un agent démoulant sur l'élément 60 de moulage et sur le fond 68 de moule. Un tel agent démoulant est par exemple sous la forme d'une solution liquide, pulvérisée sur les surfaces concernées.

Après l'obtention de l'élément 12 de rembourrage, le siège 10 est obtenu en agrafant chacun des éléments 16 d'accroche le long de la nervure 42 du support 22 d'accroche, lesdits éléments 16 d'accroche étant préalablement assemblés à la zone 52 de fixation du revêtement 14.

Selon une alternative non représentée, les éléments 16 d'accroche sont d'abord agrafés le long de la nervure 42 du support 22 d'accroche, puis le revêtement 14 est assemblé auxdits éléments 16 d'accroche au moyen d'une pluralité d'éléments de rappel (non représentés).

Selon une autre alternative, les éléments 16 d'accroche sont chacun agrafé simultanément sur la zone 52 de fixation du revêtement 14 et sur la nervure 42 du support 22 d'accroche, par exemple par une pince déformant l'élément d'accroche 16 pour perforer la nervure 42 et la zone 52 puis former une boucle sensiblement fermée d'élément d'accroche 16.

Par exemple, les éléments d'accroche 16 sont distribués le long de la nervure 42 de sorte que chaque élément d'accroche 16 soit séparé de ses voisins par une distance sensiblement régulière.

L'élément 12 de rembourrage décrit ci-dessus présente une bonne résistance mécanique du fait de l'adhésion entre le bloc 20 de mousse et le support 22 d'accroche.

Par ailleurs, un tel élément 12 de rembourrage formé de matériau plastique, dépourvu d'insert métallique, facilite les opérations de recyclage. A cet effet, le bloc 20 de mousse et le support 22 d'accroche sont avantageusement formés de matériaux similaires, comprenant notamment du polyuréthane.

Un exemple de réalisation est décrit ci-dessous :
- Les cellules présentent un diamètre inférieur à 800 µm ;
- Le cordon 78 est un mélange A+ B formant un polymère de polyuréthane, avec le produit A initialement un isocyanate et le produit B comprenant au moins un polyol.

## Revendications

1. Elément (12) de rembourrage pour siège (10) de véhicule, comprenant un bloc (20) de mousse, ledit bloc comprenant une surface externe (24) et une rainure (26), ladite rainure comprenant un fond (32) et des parois latérales (30) débouchant sur ladite surface externe ; l'élément de rembourrage comprenant en outre un support (22) d'accroche, disposé au fond de la rainure (26) ;
le support (22) d'accroche comprenant une surface (40) de contact, solidaire du fond (32) de la rainure ; l'élément de rembourrage étant **caractérisé en ce que** le support (22) d'accroche comprend:
une nervure (42), disposée à l'opposé de la surface de contact, en direction de la surface externe (24) du bloc de mousse.

2. Elément de rembourrage selon la revendication 1, dans lequel le support (22) d'accroche est formé d'un matériau plastique présentant une densité supérieure à celle du bloc (20) de mousse.

3. Elément de rembourrage selon la revendication 2, dans lequel chacun de la mousse du bloc (20) et du matériau plastique du support (22) d'accroche comprend du polyuréthane.

4. Elément de rembourrage selon l'une des revendications précédentes, dans lequel la surface (40) de contact et la nervure (42) du support d'accroche s'étendent de manière continue sur une longueur de la rainure du bloc de mousse.

5. Procédé de fabrication d'un élément (12) de rembourrage selon l'une des revendications 2 et 3, comprenant : une étape de fabrication du support (22) d'accroche par moulage du matériau plastique dudit support ; puis une étape de fabrication du bloc (20) de mousse, par surmoulage sur ledit support d'accroche, de sorte à solidariser la surface (40) de contact dudit support d'accroche avec le fond (32) de la rainure (26) du bloc de mousse.

6. Procédé de fabrication selon la revendication 5, dans lequel l'étape de fabrication du support d'accroche comprend : la fourniture d'un élément (60) de moulage comprenant une cannelure (62) de forme complémentaire à la nervure (42) du support d'accroche ; et la coulée du matériau plastique à l'état fluide dans ladite cannelure, de sorte qu'une surface supérieure (70) dudit matériau plastique forme la surface (40) de contact du support d'accroche.

7. Procédé de fabrication selon la revendication 6, dans lequel : l'élément (60) de moulage comprend des flancs (64) disposés de part et d'autre de la cannelure, lesdits flancs présentant une forme complémentaire des parois latérales (30) de la rainure du bloc de mousse ; et l'étape de fabrication du bloc de mousse comprend un surmoulage sur ledit élément de moulage recevant le support d'accroche, de sorte à former la rainure (26), le fond (32) de ladite rainure étant solidaire de la surface (40) de contact dudit support d'accroche.

8. Elément (12) de rembourrage selon l'une des revendications 1 à 4, issu d'un procédé de fabrication selon l'une des revendications 5 à 7.

9. Siège (10) de véhicule, comprenant : un élément (12) de rembourrage selon l'une des revendications 1 à 4 ou selon la revendication 8 ; un revêtement (14) souple, au contact de la surface externe (24) dudit élément de rembourrage ; et une pluralité d'éléments (16) d'accroche, fixés d'une part audit revêtement souple et d'autre part à la nervure (42) du support d'accroche de l'élément de rembourrage.

10. Siège (10) de véhicule selon la revendication 9, dans lequel la pluralité d'éléments (16) d'accroche comprend au moins une agrafe métallique s'étendant entre deux extrémités (54), lesdites extrémités étant insérées dans la nervure (42) du support d'accroche.

## Patentansprüche

1. Polsterelement (12) für einen Fahrzeugsitz (10), umfassend einen Block (20) aus Schaumstoff, der Block umfassend eine Außenoberfläche (24) und eine Nut (26), die Nut umfassend einen Boden (32) und Seitenwände (30), die sich zu der Außenoberfläche hin öffnen; das Polsterelement ferner umfassend einen Befestigungsträger (22), der an dem Boden der Nut (26) angeordnet ist;
der Befestigungsträger (22) umfassend eine Kontaktoberfläche (40), die an dem Boden (32) der Nut gesichert ist; wobei das Polsterelement **dadurch gekennzeichnet ist, dass** der Befestigungsträger (22) umfasst: eine Rippe (42), die gegenüber der Kontaktoberfläche, in der Richtung der Außenoberfläche (24) des Schaumstoffblocks, angeordnet ist.

2. Polsterelement nach Anspruch 1, wobei der Befestigungsträger (22) aus einem Kunststoffmaterial ausgebildet ist, das eine Dichte aufweist, die größer als die des Schaumstoffblocks (20) ist.

3. Polsterelement nach Anspruch 2, wobei jedes des Schaumstoffs des Blocks (20) und des Kunststoffmaterials des Befestigungsträgers (22) Polyurethan umfasst.

4. Polsterelement nach einem der vorstehenden Ansprüche, wobei sich die Kontaktoberfläche (40) und die Rippe (42) des Befestigungsträgers kontinuierlich über eine Länge der Nut des Schaumstoffblocks erstrecken.

5. Verfahren zum Herstellen eines Polsterelements (12) nach einem der Ansprüche 2 oder 3, umfassend: einen Schritt des Herstellens des Befestigungsträgers (22) durch ein Formen des Kunststoffmaterials des Trägers; dann einen Schritt des Herstellens des Schaumstoffblocks (20) durch ein Überspritzen über den Befestigungsträger, um die Kontaktoberfläche (40) des Befestigungsträgers an dem Boden (32) der Nut (26) des Schaumstoffblocks zu sichern.

6. Herstellungsverfahren nach Anspruch 5, wobei der Schritt des Herstellens des Befestigungsträgers umfasst: Bereitstellen eines Formelements (60), umfassend einen Kanal (62), der in einer Form komplementär zu der Rippe (42) des Befestigungsträgers ist; und Gießen des Kunststoffmaterials in einem flüssigen Zustand in den Kanal, sodass eine oberste Oberfläche (70) des Kunststoffmaterials die Kontaktoberfläche (40) des Befestigungsträgers ausbildet.

7. Herstellungsverfahren nach Anspruch 6, wobei: das Formelement (60) Flanken (64) umfasst, die auf beiden Seiten des Kanals angeordnet sind, wobei die Flanken eine Form aufweisen, die zu den Seitenwänden (30) der Nut des Schaumstoffblocks komplementär ist; und der Schritt des Herstellens des Schaumstoffblocks das Überspritzen über das Formelement umfasst, das den Befestigungsträger aufnimmt, um die Nut (26) auszubilden, wobei der Boden (32) der Nut an der Kontaktoberfläche (40) des Befestigungsträgers gesichert ist.

8. Polsterelement (12) nach einem der Ansprüche 1 bis 4, das aus einem Herstellungsverfahren nach einem der Ansprüche 5 bis 7 resultiert.

9. Fahrzeugsitz (10), umfassend: ein Polsterelement (12) nach einem der Ansprüche 1 bis 4 oder nach Anspruch 8; eine flexible Abdeckung (14), die in Kontakt mit der Außenoberfläche (24) des Polsterelements steht; und eine Vielzahl von Befestigungselementen (16), die an der flexiblen Abdeckung und an der Rippe (42) des Befestigungsträgers des Polsterelements befestigt sind.

10. Fahrzeugsitz (10) nach Anspruch 9, wobei die Vielzahl von Befestigungselementen (16) mindestens eine Metallklammer umfasst, die sich zwischen zwei Enden (54) erstreckt, wobei die Enden in die Rippe (42) des Befestigungsträgers eingesetzt sind.

## Claims

1. A padding element (12) for a vehicle seat (10), comprising a block (20) of foam, said block comprising an outer surface (24) and a groove (26), said groove comprising a bottom (32) and side walls (30) opening onto said outer surface; the padding element further comprising an attachment support (22) arranged at the bottom of the groove (26);
the attachment support (22) comprising a contact surface (40) secured to the bottom (32) of the groove; the padding element being **characterized in that** the attachment support (22) comprises: a rib (42) arranged opposite the contact surface, in the direction of the outer surface (24) of the foam block.

2. The padding element according to claim 1, wherein the attachment support (22) is formed from a plastics material having a density greater than that of the foam block (20).

3. The padding element according to claim 2, wherein each one of the foam of the block (20) and the plastics material of the attachment support (22) comprises polyurethane.

4. The padding element according to one of the preceding claims, wherein the contact surface (40) and the rib (42) of the attachment support extend continuously over a length of the groove of the foam block.

5. A method for manufacturing a padding element (12) according to either of claims 2 or 3, comprising: a step of manufacturing the attachment support (22) by molding the plastics material of said support; then a step of manufacturing the foam block (20) by overmolding over said attachment support, so as to secure the contact surface (40) of said attachment support to the bottom (32) of the groove (26) of the foam block.

6. The manufacturing method according to claim 5, wherein the step of manufacturing the attachment support comprises: providing a molding element (60) comprising a channel (62) complementary in shape to the rib (42) of the attachment support; and pouring the plastics material in a fluid state into said channel, so that an upper surface (70) of said plastics material forms the contact surface (40) of the attachment support.

7. The manufacturing method according to claim 6, wherein: the molding element (60) comprises flanks (64) arranged on either side of the channel, said flanks having a shape complementary to the side walls (30) of the groove of the foam block; and the step of manufacturing the foam block comprises overmolding over said molding element accommodating the attachment support, so as to form the groove (26), the bottom (32) of said groove being secured to the contact surface (40) of said attachment support.

8. The padding element (12) according to one of claims 1 to 4, resulting from a manufacturing method according to one of claims 5 to 7.

9. A vehicle seat (10) comprising: a padding element (12) according to one of claims 1 to 4 or according to claim 8; a flexible covering (14) in contact with the outer surface (24) of said padding element; and a plurality of attachment elements (16) attached to said flexible covering and to the rib (42) of the attachment support of the padding element.

10. The vehicle seat (10) according to claim 9, wherein the plurality of attachment elements (16) comprises at least one metal staple extending between two ends (54), said ends being inserted into the rib (42) of the attachment support.
